# EUROPEAN PATENT APPLICATION

(11) **EP 4 797 014 A1**
(43) Date of publication of application: **26.08.2026**
(21) Application number: 25159425.5
(22) Date of filing: 21.02.2025
(51) Int. Cl.: G05B 13/04, F27B 7/42

(54) **A METHOD AND SYSTEM OF AUTOMATING CONTROL PROCEDURES IN A CEMENT KILN**

(71) Applicant: Innomotics GmbH, 90441 Nürnberg (DE)
(72) Inventor: SCHOONE, Sunny, 91052 Erlangen (DE); A, Balakrishnan, 560021 Bangalore, karnataka (IN); SZABO, László, 1022 Budapest (HU)
(74) Representative: Michalski Hüttermann & Partner mbB

(57) **Abstract**

A method and system for automating control procedures in a cement kiln (102) are disclosed. The method involves receiving historical data collected over a specific period, analyzing the data to identify interrelationships between modifications of input parameters and variations in process parameters, and determining an effectiveness parameter for each control procedure based on these interrelationships. The processor (202) selects a control procedure from a plurality of control procedures based on the effectiveness parameter and generates a control parameter sequence accordingly. This sequence of modifications is dynamically adjusted to adapt to real-time conditions of the cement kiln (102) and executed to achieve kiln stability efficiently. The system includes a memory (204) for storing historical data and a processor (202) configured to receive, analyze, and prioritize parameters, identify interrelationships, determine effectiveness parameters, select control procedures, and execute dynamically adjusted control sequences. This automation ensures optimized kiln operation, stability, and clinker quality.

## Description

The present invention relates to the field of industrial process control and automation, specifically to the automation of control procedures in cement manufacturing. It involves the use of advanced data analysis, machine learning algorithms, and real-time monitoring to optimize the operation of cement kilns

Cement manufacturing is a complex and energy-intensive process that involves several stages, including the pyroprocessing of raw materials in a cement kiln. The kiln operation is critical to the overall efficiency and quality of cement production. Traditionally, the control of cement kilns has relied heavily on manual adjustments and operator experience, which can lead to variability in process stability and clinker quality. The high temperatures required for clinker formation and the variability in raw material composition further complicate the control process.

In recent years, advancements in sensor technology and data acquisition systems have enabled the collection of extensive real-time data from various stages of the cement manufacturing process. However, leveraging this data to optimize kiln operation remains a challenge. Conventional control systems often lack the ability to dynamically adjust to changing conditions and disturbances, leading to suboptimal performance, increased energy consumption, and inconsistent product quality.

The need for a more efficient, reliable, and automated approach to controlling cement kilns has driven research and development in this area. By integrating historical data analysis, machine learning algorithms, and real-time feedback, it is possible to develop systems that can automatically adjust control parameters to maintain optimal kiln operation. Such systems can significantly improve the stability of the kiln, enhance clinker quality, reduce energy consumption, and minimize emissions.

In light of above, there exists a need for an efficient method and system for automating control procedures in a cement kiln.

Thus it is an object of the present invention to provide a method and system for optimizing process parameters in a cement kiln.

The method comprises receiving, by a processor, historical data collected over a specific period of operation of a cement kiln. The cement kiln is a high-temperature furnace used in the cement manufacturing process to heat raw materials to a high temperature, resulting in the formation of clinker, which is then ground to produce cement. The cement kiln plays a critical role in ensuring that chemical reactions occur efficiently and consistently, thereby impacting a quality of the final cement product. The historical data refers to recorded information about the cement kiln's operational parameters, performance metrics, and outcomes over a defined period. An example of the historical data includes one or more parameters such as fuel consumption rates, temperature profiles, feed rates of raw materials, and clinker quality metrics. The historical data provides a comprehensive record of how the cement kiln has performed under various conditions and is essential for analyzing past performance to optimize future operations. The specific period of operation refers to a duration over which the historical data has been collected.

In one example, the historical data is collected over a six months time period, during which the cement kiln operated continuously and underwent several startups and shutdowns. The specific period provides enough data points to identify patterns and correlations that can be used to improve performance of the cement kiln during disturbed process conditions. The processor is configured to receive the historical data through a data acquisition system that collects and stores operational information from one or more sensors and control systems installed on the cement kiln. Examples of the one or more sensors used include temperature sensors, pressure sensors, flow meters, and gas analyzers. Temperature sensors, such as thermocouples and infrared sensors, measure temperature at various points within the cement kiln, including a burner, a kiln shell, and a material bed. Temperature readings help in monitoring a thermal profile of the cement kiln and ensuring that material reaches the required temperatures for proper clinker formation. Pressure sensors, including piezoelectric and capacitive pressure sensors, monitor the pressure within the cement kiln and associated components, such as preheater and calciner. The pressure readings help in maintaining correct pressure balance and preventing issues such as backflow or excessive pressure build-up, which can disrupt operation of the cement kiln. Flow meters, such as Coriolis and electromagnetic flow meters, measure the flow rates of various input materials, including fuel, air, and raw materials. Accurate flow rate measurements are essential for controlling combustion process, optimizing fuel usage, and ensuring the consistent feeding of raw materials into the cement kiln. Gas analyzers, including infrared gas analyzers and mass spectrometers, monitor composition of gases within the cement kiln. The gas analyzers measure concentrations of gases such as oxygen, carbon dioxide, carbon monoxide, and nitrogen oxides. Monitoring the gas composition helps in optimizing the combustion process, reducing emissions, and ensuring environmental compliance. In a cement kiln operation, the data acquisition system interfaces with the temperature sensors, pressure sensors, flow meters, and gas analyzers to collect real-time data on the kiln's operational parameters. The processor receives this data and stores it in a historical database.

For example, the temperature sensors might report that the burner temperature is 1500 degrees Celsius, the pressure sensors indicate that the kiln pressure is 1.5 bar, the flow meters measure a fuel flow rate of 500 kg/h, and the gas analyzers detect an oxygen concentration of 5% in the exhaust gases.

An example of the data acquisition system is a Supervisory Control and Data Acquisition (SCADA) system. The one or more sensors measure critical parameters such as temperature, pressure, fuel flow rates, and raw material feed rates. The data acquisition system transmits the collected data to the processor, where it is stored in a database for analysis. The processor is further configured to accesses the database to retrieve the historical data required for optimizing operation of the cement kiln during startup and other disturbed conditions.

The method further comprises analyzing, by the processor, the received historical data to prioritize one or more input parameters from a list of input parameters of the cement kiln. The one or more input parameters are prioritized based on an influence of the one or more input parameters on the kiln stability. The prioritization is achieved through an application of a specific criteria that assess the an impact of each input parameter of the plurality of input parameters on an overall stability and efficiency of the cement kiln.

The plurality of input parameters in a context of the cement kiln include variables that directly affect the cement kiln. Examples of the plurality of input parameters are fuel flow rate, burner temperature, raw material feed rate, and kiln rotation speed. Fuel flow rate determines an amount of fuel supplied to kiln burners, influencing a temperature and energy input. Burner temperature controls a heat intensity within the cement kiln, affecting chemical reactions required for clinker formation. Raw material feed rate regulates a supply of raw materials into the cement kiln, impacting load and throughput of the cement kiln. Kiln rotation speed affects a residence time of materials within the cement kiln, influencing a uniformity of heat distribution and clinker formation. The specific criteria used for prioritization include one or more factors such as a sensitivity of the cement kiln performance to changes in the one or more input parameters, a frequency and severity of disturbances associated with variations in the one or more input parameters, and historical evidence of successful control adjustments of the one or more input parameters that leads to stable kiln conditions.

For example, the processor is configured to determine that fuel flow rate and burner temperature have an impact on the kiln stability based on historical data showing that precise control of the one or more input parameters consistently leads to optimal clinker quality and reduced energy consumption. The processor is configured to use machine learning algorithms, such as regression analysis, decision trees, and neural networks, to analyze the historical data and identify the relationships between the plurality of input parameters and the kiln stability. In one instance, regression analysis helps in quantifying a strength and a nature of relationship between the plurality of input parameters and kiln performance metrics. In another example, the processor is configured to use decision trees which provide a visual representation of decision rules derived from historical data, highlighting the one or more input parameters influencing the kiln stability. Examples of the machine learning algorithms further comprises machine learning algorithms such as Linear Regression, Decision Trees (e.g., C4.5), K-Means Clustering, Support Vector Machines (SVM), Random Forests, Gradient Boosting Machines (GBM), Artificial Neural Networks (ANN), Convolutional Neural Networks (CNN), and Long Short-Term Memory (LSTM) networks. The method further comprises analyzing, by the processor, the historical data to identify one or more interrelationships between one or more modifications of one or more input parameters and one or more variations in a plurality of process parameters. The analysis is done using advanced machine learning algorithms that parse through the historical data to uncover patterns and correlations. The machine language algorithms comprise algorithms such as regression analysis, clustering, and neural networks to identify how changes in the one or more input parameters affect the plurality of process parameters and overall kiln stability.

In one example, the one or more modifications refer to specific adjustments made to the one or more input parameters to influence performance of the cement kiln. An example of a modification is adjusting the fuel flow rate from 1000 kg/hour to 1100 kg/hour to increase the burner temperature. The plurality of process parameters are the measurable variables that indicate the kiln's operational state. Examples of the plurality of process parameters include kiln temperature, pressure, clinker quality metrics, and energy consumption rates. The plurality of process parameters provide insights into how well the cement kiln is performing and whether the cement kiln is operating within a desired range. The one or more variations refer to changes observed in the plurality of process parameters as a result of the one or more modifications to the one or more input parameters. For instance, a variation in kiln temperature might be observed when the fuel flow rate is increased. The one or more variations help in assessing an impact of specific changes on kiln operation. In other words, the one or more interrelationships refer to connections between the one or more modifications to the one or more input parameters and resulting effects on the plurality of process parameters.

For example, increasing fuel flow rate may lead to a higher burner temperature, which in turn affects an internal temperature profile and clinker quality of the cement kiln. The one or more interrelationships help in understanding a cause-and-effect dynamics within operation of the cement kiln.

In a context of software, the one or more interrelationships are represented as data objects. The data objects encapsulate both the one or more input parameters and the plurality of process parameters, allowing the processor to analyze efficiently. For instance, a data object may include attributes such as fuel flow rate, burner temperature, internal kiln temperature, and clinker quality metrics.

Common types of the data objects used to represent the one or more interrelationships include structured data types like tuples, dictionaries, and custom classes.

In one example, a tuple stores a combination of the one or more input parameters and one or more process parameters, providing a simple and immutable representation of the one or more interrelationships.

For example, a tuple contains values such as (fuel_flow_rate, burner_temperature, kiln_temperature, clinker_quality). Alternatively, the one or more interrelationships are stored as a dictionary. In this case, the dictionary keys could represent the one or more input parameters like fuel_flow_rate, while the values could be another dictionary or a list representing changes in the plurality of process parameters such as burner_temperature, kiln_temperature, and clinker_quality. In other words, in a cement kiln operation, the processor collects the historical data and uses the historical data to create a plurality of software data objects that capture the one or more interrelationships between input parameters and process parameters. For instance, the processor might create a KilnOperationData object with attributes fuel_flow_rate set to 500 kg/h, burner_temperature set to 1500 degrees Celsius, kiln_temperature set to 1300 degrees Celsius, and clinker_quality measured as high. The KilnOperationData object allows the processor to analyze how changes in fuel_flow_rate impact burner_temperature, kiln_temperature, and ultimately clinker_quality. To further illustrate, suppose the processor identifies an interrelationship where increasing the fuel flow rate by 50 kg/h results in a 10-degree increase in burner temperature, which subsequently raises the kiln temperature by 8 degrees and improves clinker quality by 5%. The processor represents this relationship using a dictionary where the key fuel_flow_rate maps to a nested dictionary detailing the changes in burner_temperature, kiln_temperature, and clinker_quality.

Each control procedure of a plurality of control procedures comprises a sequence of modifications which is made to the one or more input parameters to achieve a desired operational state of the cement kiln.

For example, during a kiln startup, a first control procedure comprises gradually increasing the burner temperature and adjusting the fuel flow rate in specific increments to ensure a smooth and stable startup. The first control procedure is designed to systematically adjust the input parameters to achieve optimal kiln performance.

In one example, each modification of the sequence of modification builds upon a previous modification, thereby creating a cumulative effect that guides the cement kiln towards a stable and optimal state. The sequence of modifications are designed to be made in a deliberate and logical order to ensure that each change contributes effectively to a control objective of the cement kiln.

For example, in a cement kiln startup operation, the sequence of modifications begin with gradually increasing the fuel flow rate. Initially, the fuel flow rate might be set to 200 kg/hour. After monitoring a response of the cement kiln, the fuel flow rate is incrementally increased to 400 kg/hour, and subsequently to 600 kg/hour. Following adjustments to the fuel flow rate, the burner temperature is then gradually raised. The burner temperature might be initially set to 800 degrees Celsius, then increased to 900 degrees Celsius, and finally to 1000 degrees Celsius. Each step in the sequence of modifications is carefully timed and monitored to ensure that the cement kiln responds positively, and any adverse effects are mitigated. The method further comprises determining, by the processor, an effectiveness parameter of each control procedure of the plurality of control procedures based on the identified one or more interrelationships. The effectiveness parameter of a specific control procedure is indicative of a time taken by the control procedure to achieve kiln stability. Examples of data dimensions of the effectiveness parameter include various metrics such as a duration required to reach a stable operating state, a consistency and quality of clinker produced by the cement kiln, and an overall energy efficiency of the cement kiln. In other words, the effectiveness parameter of each control procedure is a composite metric that quantifies a performance of the control procedure.

In one example, the effectiveness parameter is generated by analyzing the historical data to identify a plurality of relationships between specific changes in input parameters and an impact of the specific changes on a plurality of process parameters.

For example, the processor is configured to analyze how incremental adjustments to the fuel flow rate and burner temperature influence internal temperature and clinker quality of the cement kiln over time.

The Kiln stability refers to a condition where the cement kiln operates within a desired range of parameters, ensuring consistent clinker quality and efficient energy use. The Kiln stability is measured by monitoring the plurality of process parameters such as temperature, pressure, and fuel consumption.

In one example, the plurality of process parameters are represented through time-series data and statistical metrics that indicate whether the cement kiln is operating within acceptable limits.

In one example, the effectiveness parameter of each control procedure is generated from the one or more interrelationships by evaluating how quickly and efficiently the cement kiln reaches stability following a series of modifications of the control procedure. For instance, if the historical data shows that increasing the fuel flow rate by 50 kg/hour and adjusting the burner temperature by 10 degrees Celsius results in the kiln reaching stability within two hours, the one or more interrelationships contribute to a high effectiveness parameter. Conversely, if similar modifications take longer to stabilize the kiln or result in inconsistent clinker quality, the effectiveness parameter would be lower. In other words, the effectiveness parameter is a composite metric that quantifies a performance of the control procedure based on a plurality of factors associated with the cement kiln.

The plurality of factors includes a time required to reach a stable operating state, a consistency and quality of clinker produced, an overall energy consumption, and a reduction of emissions.

For example, time required to reach stability is a critical factor because shorter stabilization times lead to higher productivity and reduced downtime. Consistency and quality of the clinker are essential for meeting production standards and minimizing waste. Overall energy consumption is a significant factor as it directly affects the operational costs and environmental footprint of the cement plant. Reduction of emissions is increasingly important for regulatory compliance and environmental sustainability.

In one example, the effectiveness parameter of the specific control procedure is derived from the plurality of factors by using a weighted scoring system, where each factor is assigned a weightage of the specific control procedure based on an impact of the specific procedure on an overall performance of the kiln. For instance, a time required to reach stability might be weighted more heavily than the reduction of emissions if the primary goal is to maximize production efficiency. The method further comprises selecting, by the processor, a control procedure from the plurality of control procedures based on an effectiveness parameter of the control procedure. The selection is carried out by the processor, which employs a machine learning model designed to evaluate the historical data real-time sensor feedback, and the effectiveness parameter of each control procedure to select the control procedure. An input variable for the machine learning model is the effectiveness parameter. An output variable of the machine learning model is the selection of the control procedure from the plurality of control procedures. The selected control procedure is identified based on the effectiveness parameter of the control procedure. Examples of the machine learnig models include decision trees, random forests, support vector machines (SVM), and neural networks. For instance, a random forest model can be used to analyze the effectiveness parameter in light of the one or more input parameters and real-time process conditions of the cement kiln. Similarly, a neural network model can be trained to predict the most effective control procedure based on the effectiveness parameter. The training of the machine learning model involves several steps. Initially, the processor collects a training dataset comprising the effectiveness parameter and historical data on various input parameters such as fuel feed rate, air flow, kiln speed, raw material composition, and firing temperature. The training dataset also includes corresponding process parameters such as temperature, pressure, and gas composition within the kiln, as well as the effectiveness parameters of past control procedures. During the training phase, the machine learning model, for example, a random forest algorithm, is exposed to the training data. The machine learning model learns to map the input variables, which are the effectiveness parameters, to the output variables, which are the selected control procedure. The machine learning model adjusts internal parameters to minimize prediction error, which is difference between a predicted control procedure and an actual control procedure that led to optimal kiln stability, according to the historical data.

For example, suppose the historical data reveals that a first control procedure achieved kiln stability in two hours, maintained high clinker quality, and optimized energy usage. A second procedure may have taken three hours to achieve stability and resulted in lower clinker quality with higher energy consumption. The processor assigns a higher effectiveness parameter to the first control procedure due to a superior performance. The machine learning model then uses the effectiveness parameter to select the most appropriate control procedure for current process conditions. For instance, if the current kiln operation faces similar disturbances as those recorded in the historical data, the processor will select the first control procedure with a higher effectiveness parameter. By doing so, the processor selects the control procedure which is likely to achieve kiln stability in the shortest time, maintain clinker quality, and optimize energy usage.

The method further comprises generating, by the processor, a control parameter sequence based on the effectiveness parameter of the selected control procedure. The control parameter sequence refers to a specific set of modifications made to the one or more input parameters in a defined order during the control procedure. The control parameter sequence is selected based on the effectiveness parameter of the control procedure, which is indicative of a time taken by the control procedure to achieve kiln stability, ensuring that a most efficient sequence is utilized.

To generate the control parameter sequence, the processor is configured to examine the control procedure to identify successful sequences of input parameter adjustments that led to stable kiln operation.

For example, in a cement kiln operation, the historical data might reveal that increasing the fuel feed rate by 30 kg/hour and simultaneously adjusting the burner temperature by 5 degrees Celsius resulted in the kiln reaching stability within three hours. The processor would record these specific modifications as part of the control parameter sequence. The generation of the control parameter sequence is done using a machine learning algorithm, such as a neural network or a decision tree. The machine learning algorithm analyzes the historical data to identify patterns and correlations between the input parameter modifications and a resulting process stability. The control parameter sequence is then dynamically adjusted based on real-time feedback from the one or more sensors installed in the cement kiln. The one or more sensors provide continuous data on various dimensions of operating conditions of the cement kiln, such as temperature, pressure, fuel feed rate, and airflow rate. The processor is further configured to use real-time feedback to compare a current state of the cement kiln with a desired state as predicted by the machine learning algorithm. If discrepancies are detected, the processor is configured to adjust the control parameter sequence accordingly, ensuring that the cement kiln remains stable and operates efficiently. The control parameter sequence is intrinsically linked to the control procedure, as the control procedure dictates exact steps and order in which the one or more input parameters are adjusted. An importance of the defined order lies in the one or more interrelationships between different parameters; for instance, adjusting the fuel feed rate before setting the airflow might yield different results than doing the reverse. The defined order is typically determined by analyzing historical data and expert knowledge, ensuring that the sequence follows a proven path to stability.

The method further comprises executing, by the processor, the generated control parameter sequence. Execution refers to an implementation of modifications to the input parameters as outlined in the control parameter sequence. In the context of a cement kiln operation, execution involves real-time adjustment of various technical components to achieve optimal process conditions. One or more technical parts of a cement plant used for the execution include a fuel feed system, air supply system, temperature control units, and a monitoring sensor. For instance, the fuel feed system may include variable speed drives and feeders that regulate the amount of fuel being fed into the kiln. The air supply system may consist of fans and dampers that control the airflow into the combustion chamber. Temperature control units may involve burners and thermocouples that ensure the kiln maintains the desired temperature profile. During execution, the processor sends commands to the one or more technical parts to adjust settings according to the control parameter sequence.

For example, the processor may increase the fuel feed rate by adjusting the speed of the fuel feed drive, or it may modify the airflow by changing the position of dampers in the air supply system. The effect of execution is the stabilization of the kiln operation, leading to consistent clinker quality and optimized energy consumption. The input variables of used by the processors to execute the control parameter sequence include current values of fuel feed rate, airflow, and kiln temperature, which are continuously monitored by sensors. A set of input variables provide real-time data to the processor, allowing for dynamic adjustments. A set of output variables of execution are modified settings of technical components, such as the new fuel feed rate, adjusted airflow, and stabilized kiln temperature. The output variables result in the desired process conditions being achieved, ensuring efficient and stable kiln operation.

The method further comprises displaying, by the processor, a complete startup procedure curve to an operator prior to initiating a kiln startup. The complete startup procedure is generated from the control parameter sequence by the processor through a series of steps. Initially, the processor analyzes the historical data to identify successful sequences of input parameter adjustments that led to stable kiln operation. The processor then organizes these sequences into a coherent startup procedure, detailing each step required to achieve optimal kiln performance. In the context of a cement kiln operation, the complete startup procedure may include specific instructions for adjusting the fuel feed rate, airflow rate, burner temperature, and kiln rotation speed. For instance, the procedure might start by setting the fuel feed rate to an initial value of 100 kg/hour, followed by gradually increasing the burner temperature by 5 degrees Celsius every 30 minutes. The processor ensures that each step in the sequence is logically ordered and timed to achieve the desired stability efficiently. The importance of generating the complete startup procedure lies in its ability to standardize the kiln startup process, reducing variability and dependence on individual operator experience. By providing a detailed and proven sequence of adjustments, the startup procedure minimizes the risk of errors and ensures that the kiln reaches a stable operating state in the shortest possible time. The complete startup procedure is useful for the operator as it serves as a clear and actionable roadmap, guiding them through each step of the process. The advantages for the operator are manifold. Firstly, the startup procedure reduces the cognitive load on the operator by providing precise instructions, eliminating guesswork and reducing the likelihood of mistakes. Secondly, the standardized procedure ensures consistent clinker quality and optimal energy consumption, enhancing overall operational efficiency. Thirdly, the startup procedure allows less experienced operators to achieve results comparable to those of seasoned experts, leveling the playing field and improving workforce flexibility. Finally, the detailed procedure enables operators to monitor progress and make informed adjustments in real-time, fostering a proactive approach to kiln management.

The method further comprises generating, based on the control procedure, a set of guidelines that is applicable to future startup procedures. The processor analyzes the historical data and the selected control procedure to develop comprehensive guidelines. These guidelines contain detailed instructions on the sequence of modifications to the input parameters, such as fuel feed rate, air flow, kiln speed, and raw material composition. The guidelines also specify the expected variations in process parameters, including temperature, pressure, and gas composition within the kiln. In addition to the step-by-step modifications, the guidelines provide thresholds and limits for each input parameter to ensure safe and efficient operation.

For example, the guidelines may indicate that the fuel feed rate should be increased incrementally by a specific amount every ten minutes until a target temperature is reached. The air flow might need to be adjusted in tandem to maintain optimal combustion conditions. The kiln speed could be regulated to control the residence time of the material, ensuring thorough heating and consistent clinker quality. The guidelines also include contingency plans for handling unexpected disturbances. If real-time sensor feedback indicates a deviation from the expected process parameters, the guidelines offer corrective actions to bring the system back to stability. For instance, if the temperature inside the kiln drops below the desired range, the guidelines might recommend increasing the fuel feed rate or adjusting the air flow to restore the temperature. An example of how the guidelines work in a cement kiln operation involves the processor collecting historical data on various input parameters and analyzing the effectiveness of past control procedures. Suppose the historical data shows that a particular control procedure achieved kiln stability in two hours, maintained high clinker quality, and optimized energy usage. The processor uses this information to generate guidelines for future startup procedures. For instance, the guidelines might specify that during startup, the fuel feed rate should initially be set to 500 kg per hour and gradually increased by 50 kg every ten minutes. The air flow should be adjusted to maintain an oxygen level of 5% in the kiln exhaust gases. The kiln speed should be set to 3 RPM initially and increased to 4 RPM once the temperature reaches 800 degrees Celsius. The guidelines also include instructions for monitoring real-time sensor data and making adjustments if the process parameters deviate from the expected values. If the temperature inside the kiln drops below 750 degrees Celsius, the guidelines recommend increasing the fuel feed rate by an additional 25 kg per hour until the temperature stabilizes.

The method involves automating operating strategies specifically tailored for disturbed process conditions in a cement kiln, where disturbed process conditions refer to any deviations from normal operating parameters that can affect kiln performance and stability. The disturbed conditions include fluctuations in fuel quality, variations in raw material composition, and unexpected changes in temperature or pressure within the kiln. By receiving real-time process conditions through a network of sensors, including temperature sensors, pressure sensors, flow meters, and gas analyzers, the processor can monitor the kiln's operational state continuously. The real-time data collected from these sensors provide immediate feedback on the kiln's performance, allowing the processor to make precise and timely modifications to input parameters. These modifications, such as adjusting the fuel flow rate or burner temperature, result in measurable effects on kiln operation, demonstrating a clear cause-and-effect relationship.

For example, increasing the fuel flow rate can lead to a rise in burner temperature, which subsequently impacts the internal temperature profile and clinker quality. By leveraging real-time sensor data, the system ensures that the kiln operates within optimal parameters, maintaining stability and efficiency even under disturbed conditions.

The processor is further configured to automate event-reaction-result phenomenon to handle disturbances more effectively. By leveraging a digitized database of historical operator actions, the processor is enabled to automatically respond to disturbances based on proven strategies that have led to successful outcomes in the past. Thus, the cement kiln is stabilized faster, minimizing downtime and maintaining consistent production quality.

The processor is further configured to use a self-learning mechanism that continuously refines and optimizes control strategies. The processor is configured to utilize new data and operator actions to improve recommendations over time. By analyzing an effectiveness of past adjustments and incorporating successful strategies into database, the processor evolves to handle disturbances more efficiently. Thus, a self-learning capability ensures that the processor adapts to changing conditions and continuously improves performance, leading to enhanced kiln stability and productivity. Additionally, the method provides a cloud of recommended options derived from historical data. The cloud comprises multiple potential solutions for any given disturbance, allowing the processor to select a most effective match based on current process conditions. By comparing the present situation with similar past occurrences, the processor is configured to select the control procedure to implement, there by providing a possible outcome for maintaining kiln stability and clinker quality.

In one example, the processor is configured to employ predefined physical parameter limits integrated into interlocking functions. The physical parameter limits act as safety thresholds, preventing the processor from making adjustments that could harm equipment or disrupt the process. The processor is further configured to support dynamic adoption of operator changes. When operators make adjustments that lead to better performance, the processor dynamically incorporates changes into a database, thereby enhancing a self-learning mechanism, allowing the processor to adapt to new strategies and continuously improve recommendations. By valuing operator expertise and incorporating it into the processor.

The object of the invention is further achieved by a system for automating control procedures in a cement kiln, comprising a memory configured to store historical data collected over a predefined period of operation from the cement kiln. A processor is configured to receive the historical data stored in the memory, analyze the received historical data to prioritize one or more parameters for the cement kiln, wherein the one or more parameters are prioritized by evaluating an influence of the one or more parameters on kiln stability. The processor further analyzes the historical data to identify one or more interrelationships between one or more modifications in the one or more parameters and one or more variations in a plurality of process parameters, wherein the one or more modifications are specific changes in the one or more parameters, and the one or more variations on the plurality of process parameters is a measurable effect on a kiln operation due to the one or more modifications.

The control parameter sequence comprises a sequence of modifications of the one or more parameters. The processor determines an effectiveness parameter of each control procedure of a plurality of control procedures based on the identified one or more interrelationships, wherein the effectiveness parameter is indicative of a time taken by the control procedure to achieve kiln stability. The processor then selects a control procedure from the plurality of control procedures based on the effectiveness parameter of the control procedure, and executes a control parameter sequence based on the effectiveness parameter of the control procedure, wherein the control parameter sequence is dynamically adjusted to adapt to real-time process conditions. The system includes kiln input parameters that have an impact on the stability of the cement kiln during startup procedures. The effectiveness parameter is a composite metric that quantifies the performance of the control procedure based on a plurality of factors associated with the cement kiln, including the duration required to reach a stable operating state, the consistency and quality of the end product, and the overall energy usage, with each factor weighted based on its relative significance to operational efficiency. The control parameter sequence is created by the processor using a machine learning algorithm configured to analyze historical data to identify the one or more modifications of the one or more parameters, and is dynamically adjusted based on real-time feedback from one or more process sensors. The real-time process conditions are monitored using one or more sensors configured to measure the one or more parameters of the cement kiln.

The object of the invention is further achieved by a computer program product for automating control procedures in a cement kiln, the computer program product comprising a non-transitory computer-readable storage medium having program instructions embodied thereon. The program instructions are executable by a processor to perform a method comprising receiving historical data collected over a specific period of operation of the cement kiln, analyzing the historical data to identify one or more interrelationships between one or more modifications of one or more input parameters and one or more variations in a plurality of process parameters. The one or more modifications are specific changes in the one or more input parameters, and the one or more variations on the plurality of process parameters are measurable effects on kiln operation due to the one or more modifications. The control procedure comprises a sequence of modifications of the one or more input parameters. The method further includes determining an effectiveness parameter of each control procedure of a plurality of control procedures based on the identified one or more interrelationships, wherein the effectiveness parameter is indicative of the time taken by the control procedure to achieve kiln stability. The processor selects a control procedure from the plurality of control procedures based on the effectiveness parameter of the control procedure and generates a control parameter sequence based on the effectiveness parameter of the control procedure, wherein the control parameter sequence is a specific set of modifications made to the one or more input parameters in a defined order during the control procedure. The control parameter sequence is dynamically adjusted to adapt to real-time process conditions of the cement kiln. Finally, the processor executes the generated control parameter sequence associated with the control procedure.

The present invention is further described hereinafter with reference to illustrated embodiments shown in the accompanying drawings, in which the features of the individual objects claimed or described can readily be combined with one another. Hereinafter, the invention is illustrated and explained in more detail by way of example with reference to the figures. The features shown in the figures can be combined by a person skilled in the art to form new embodiments without departing from the scope of the invention. Elements of the same type are given the same reference character. It is shown in:
FIG. 1: is a block diagram of a system for a system of automating control procedures in a cement kiln, in which an embodiment of the present invention can be implemented.
FIG. 2 is a block diagram of a control system, in which an embodiment of the present invention can be implemented.
FIG. 3 is a process flowchart illustrating an exemplary method of automating control procedures in a cement kiln, according to an embodiment of the present invention. and
FIG. 4 is a process flowchart illustrating an exemplary use case of automating control procedures in a cement kiln, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

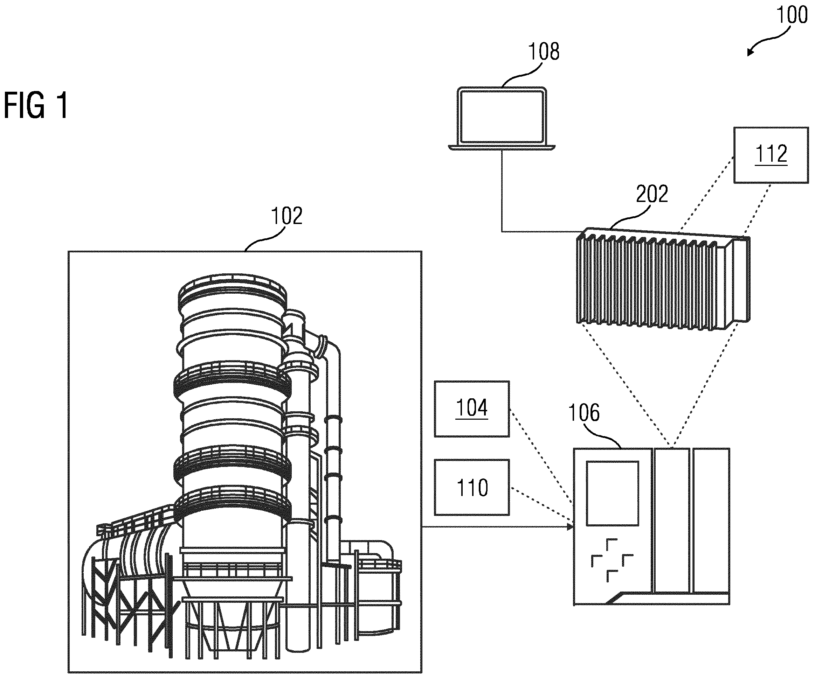

FIG. 1: is a block diagram of a system 100 for automating control procedures in a cement kiln 102, according to an embodiment of the present invention. In FIG 1, the system 100 includes one or more sensors 104, a control system 106, and a human machine interface 108. The control system 106 comprises a processor 202 such as a programmable logic controller. The processor 202 comprises an automation module 112 which is configured to automatically optimize the fuel consumption in the cement kiln 102.

The cement kiln 102 is a large, cylindrical vessel which is used during a pyroprocessing stage of cement production. Inside the cement manufacturing kiln 102, a plurality of raw materials are pyroprocessed to generate clinker. Examples of the plurality of raw materials include limestone, clay, or shale. The pyroprocessing happens at very high temperatures and is thus fuel-intensive.

Examples of fuel consumed includes coal, natural gas, and oil. The fuel consumed by the cement manufacturing kiln is expensive, and thus by optimizing fuel consumption, return of interest can be optimized. Furthermore, a temperature of the cement manufacturing kiln is dependent on the fuel consumption of the cement manufacturing kiln. A stability of the cement manufacturing kiln is dependent on the temperature. Thus, by optimizing the fuel consumption, a stability of the cement manufacturing kiln can be maintained, and furthermore, a return of investment of the cement manufacturing kiln can be optimized.

The outputs of the cement manufacturing kiln 102 are primarily the clinker and waste gases. A quality and one or more properties of clinker has a significant impact on a final strength and a quality of cement produced by the cement manufacturing plant. Since the quality of clinker is proportional to a stability of the cement manufacturing kiln, optimizing the fuel consumption becomes of paramount importance.

The one or more sensors 104 are configured to capture a plurality of operational parameters from the cement manufacturing kiln 102.

The control system 106 is configured to coordinate and optimize one or more stages of cement production. The control system 106 is configured to process inputs from the one or more sensors 104 to manage activities such as precise mixing of raw materials, control of kiln temperature for clinker production, and timing of cooling processes to ensure quality of the final cement.

The human machine interface (HMI) 108 is configured to enable operators to interact directly with the control system 106. Operators can use HMI panels to monitor process variables like kiln temperature and motor speeds, adjust operational parameters, and troubleshoot issues from a centralized location. For instance, the HMI 108 is configured to display diagnostics from the cement kiln 102, to allow operators to make immediate adjustments or shutdowns to prevent damage or inefficiencies in the cement manufacturing kiln.

The processor 202, is typically a Programmable Logic Controller (PLC), which is crucial for executing complex control algorithms. In cement production, the PLC can automate repetitive tasks such as the sequential operation of valves for loading and unloading materials or the regulation of the grinding and baking processes. The processor 202 is further configured to analyze data captured by the one or more sensors 104.

The Carbon Monoxide (CO) probe 110 is a sensor specifically designed to measure a concentration of carbon monoxide in the cement kiln 102. The Carbon Monoxide probe 110 plays a role in monitoring and controlling a combustion process within the cement kiln 102.

The automation Module 112 comprises software code which, when executed by the processor 202, causes the processor 202 to early detect blockage of the carbon monoxide probe 110.

The automation module 112 incorporates software that, when executed by the processing unit 202, monitor a kiln inlet oxygen level and a kiln inlet nitrogen oxide level. For instance, the automation module 112 is configured to continuously analyze data from the one or more sensors 104 to monitor oxygen, nitrogen oxide, and carbon monoxide.

The automation module 112 is configured to cause the processor 202 to receive historical data collected over a specific period of operation of a cement kiln 102. The cement kiln 102 is a high-temperature furnace used in the cement manufacturing process to heat raw materials to a high temperature, resulting in the formation of clinker, which is then ground to produce cement. The cement kiln 102 plays a critical role in ensuring that chemical reactions occur efficiently and consistently, thereby impacting the quality of the final cement product. The historical data refers to recorded information about the cement kiln 102's operational parameters, performance metrics, and outcomes over a defined period. An example of the historical data includes one or more parameters such as fuel consumption rates, temperature profiles, feed rates of raw materials, and clinker quality metrics. The historical data provides a comprehensive record of how the cement kiln 102 has performed under various conditions and is essential for analyzing past performance to optimize future operations. The specific period of operation refers to a duration over which the historical data has been collected.

In one example, the historical data is collected over a six-month period, during which the cement kiln 102 operated continuously and underwent several startups and shutdowns. The specific period provides enough data points to identify patterns and correlations that can be used to improve the performance of the cement kiln 102 during disturbed process conditions. The processor 202 is configured to receive the historical data through a data acquisition system that collects and stores operational information from one or more sensors 104 and control systems installed on the cement kiln 102. Examples of the one or more sensors 104 used include temperature sensors, pressure sensors, flow meters, and gas analyzers. Temperature sensors, such as thermocouples and infrared sensors, measure temperature at various points within the cement kiln 102, including a burner, a kiln shell, and a material bed. Temperature readings help in monitoring the thermal profile of the cement kiln 102 and ensuring that material reaches the required temperatures for proper clinker formation. Pressure sensors, including piezoelectric and capacitive pressure sensors, monitor the pressure within the cement kiln 102 and associated components, such as preheater and calciner. The pressure readings help in maintaining correct pressure balance and preventing issues such as backflow or excessive pressure build-up, which can disrupt the operation of the cement kiln 102. Flow meters, such as Coriolis and electromagnetic flow meters, measure the flow rates of various input materials, including fuel, air, and raw materials. Accurate flow rate measurements are essential for controlling the combustion process, optimizing fuel usage, and ensuring the consistent feeding of raw materials into the cement kiln 102. Gas analyzers, including infrared gas analyzers and mass spectrometers, monitor the composition of gases within the cement kiln 102. The gas analyzers measure concentrations of gases such as oxygen, carbon dioxide, carbon monoxide, and nitrogen oxides. Monitoring the gas composition helps in optimizing the combustion process, reducing emissions, and ensuring environmental compliance. In a cement kiln 102 operation, the data acquisition system interfaces with the temperature sensors, pressure sensors, flow meters, and gas analyzers to collect real-time data on the kiln's operational parameters. The processor 202 receives this data and stores it in a historical database.

For example, the temperature sensors might report that the burner temperature is 1500 degrees Celsius, the pressure sensors indicate that the kiln pressure is 1.5 bar, the flow meters measure a fuel flow rate of 500 kg/h, and the gas analyzers detect an oxygen concentration of 5% in the exhaust gases. An example of the data acquisition system is a Supervisory Control and Data Acquisition (SCADA) system. The one or more sensors 104 measure critical parameters such as temperature, pressure, fuel flow rates, and raw material feed rates. The data acquisition system transmits the collected data to the processor 202, where it is stored in a database for analysis. The processor 202 accesses the database to retrieve the historical data required for optimizing the operation of the cement kiln 102 during startup and other disturbed conditions.

The automation module 112 is configured to cause the processor 202 to analyze the received historical data to prioritize one or more input parameters from a list of input parameters of the cement kiln 102. The one or more input parameters are prioritized based on an influence of the one or more input parameters on the kiln stability. The prioritization is achieved through the application of specific criteria that assess the impact of each input parameter of the plurality of input parameters on the overall stability and efficiency of the cement kiln 102. The plurality of input parameters in the context of the cement kiln 102 includes variables that directly affect the cement kiln 102. Examples of the plurality of input parameters are fuel flow rate, burner temperature, raw material feed rate, and kiln rotation speed. Fuel flow rate determines the amount of fuel supplied to kiln burners, influencing temperature and energy input. Burner temperature controls heat intensity within the cement kiln 102, affecting chemical reactions required for clinker formation. Raw material feed rate regulates the supply of raw materials into the cement kiln 102, impacting load and throughput of the cement kiln 102. Kiln rotation speed affects the residence time of materials within the cement kiln 102, influencing the uniformity of heat distribution and clinker formation. The specific criteria used for prioritization include one or more factors such as the sensitivity of the cement kiln 102 performance to changes in the one or more input parameters, the frequency and severity of disturbances associated with variations in the one or more input parameters, and historical evidence of successful control adjustments of the one or more input parameters that lead to stable kiln conditions.

For example, the processor 202 determines that fuel flow rate and burner temperature have an impact on kiln stability based on historical data showing that precise control of the one or more input parameters consistently leads to optimal clinker quality and reduced energy consumption. The processor 202 uses machine learning algorithms, such as regression analysis, decision trees, and neural networks, to analyze the historical data and identify the relationships between the plurality of input parameters and kiln stability. In one instance, regression analysis helps in quantifying the strength and nature of the relationship between the plurality of input parameters and kiln performance metrics. In another example, the processor 202 uses decision trees, which provide a visual representation of decision rules derived from historical data, highlighting the one or more input parameters influencing kiln stability.

The automation module 112 is configured to cause the processor 202 to analyze the historical data to identify one or more interrelationships between one or more modifications of the one or more input parameters and one or more variations in a plurality of process parameters. The analysis is done using advanced machine learning algorithms that parse through the historical data to uncover patterns and correlations. The machine learning algorithms comprise algorithms such as regression analysis, clustering, and neural networks to identify how changes in the one or more input parameters affect the plurality of process parameters and overall kiln stability.

In one example, the one or more modifications refer to specific adjustments made to the one or more input parameters to influence the performance of the cement kiln 102. An example of a modification is adjusting the fuel flow rate from 1000 kg/hour to 1100 kg/hour to increase the burner temperature. The plurality of process parameters are the measurable variables that indicate the kiln's operational state. Examples of the plurality of process parameters include kiln temperature, pressure, clinker quality metrics, and energy consumption rates. The plurality of process parameters provide insights into how well the cement kiln 102 is performing and whether the cement kiln 102 is operating within a desired range. The one or more variations refer to changes observed in the plurality of process parameters as a result of the one or more modifications to the one or more input parameters. For instance, a variation in kiln temperature might be observed when the fuel flow rate is increased. The one or more variations help in assessing the impact of specific changes on kiln operation. In other words, the one or more interrelationships refer to connections between the one or more modifications to the one or more input parameters and the resulting effects on the plurality of process parameters.

For example, increasing the fuel flow rate may lead to a higher burner temperature, which in turn affects the internal temperature profile and clinker quality of the cement kiln 102. The one or more interrelationships help in understanding cause-and-effect dynamics within the operation of the cement kiln 102. In the context of software, the one or more interrelationships are represented as data objects. The data objects encapsulate both the one or more input parameters and the plurality of process parameters, allowing the processor 202 to analyze them efficiently. For instance, a data object may include attributes such as fuel flow rate, burner temperature, internal kiln temperature, and clinker quality metrics. Common types of data objects used to represent the one or more interrelationships include structured data types like tuples, dictionaries, and custom classes.

In one example, a tuple stores a combination of the one or more input parameters and one or more process parameters, providing a simple and immutable representation of the one or more interrelationships.

For example, a tuple contains values such as (fuel_flow_rate, burner_temperature, kiln_temperature, clinker_quality). Alternatively, the one or more interrelationships are stored as a dictionary. In this case, the dictionary keys could represent the one or more input parameters like fuel_flow_rate, while the values could be another dictionary or a list representing changes in the plurality of process parameters such as burner_temperature, kiln_temperature, and clinker_quality. In other words, in a cement kiln 102 operation, the processor 202 collects the historical data and uses it to create a plurality of software data objects that capture the one or more interrelationships between input parameters and process parameters. For instance, the processor 202 might create a KilnOperationData object with attributes fuel_flow_rate set to 500 kg/h, burner_temperature set to 1500 degrees Celsius, kiln_temperature set to 1300 degrees Celsius, and clinker_quality measured as high. The KilnOperationData object allows the processor 202 to analyze how changes in fuel_flow_rate impact burner_temperature, kiln_temperature, and ultimately clinker_quality. To further illustrate, suppose the processor 202 identifies an interrelationship where increasing the fuel flow rate by 50 kg/h results in a 10-degree increase in burner temperature, which subsequently raises the kiln temperature by 8 degrees and improves clinker quality by 5%. The processor 202 represents this relationship using a dictionary where the key fuel_flow_rate maps to a nested dictionary detailing the changes in burner_temperature, kiln_temperature, and clinker_quality. Each control procedure of a plurality of control procedures comprises a sequence of modifications which are made to the one or more input parameters to achieve a desired operational state of the cement kiln 102.

For example, during a kiln startup, a first control procedure comprises gradually increasing the burner temperature and adjusting the fuel flow rate in specific increments to ensure a smooth and stable startup. The first control procedure is designed to systematically adjust the input parameters to achieve optimal kiln performance.

In one example, each modification of the sequence of modifications builds upon a previous modification, thereby creating a cumulative effect that guides the cement kiln 102 towards a stable and optimal state. The sequence of modifications is designed to be made in a deliberate and logical order to ensure that each change contributes effectively to the control objective of the cement kiln 102.

For example, in a cement kiln 102 startup operation, the sequence of modifications begins with gradually increasing the fuel flow rate. Initially, the fuel flow rate might be set to 200 kg/hour. After monitoring the response of the cement kiln 102, the fuel flow rate is incrementally increased to 400 kg/hour, and subsequently to 600 kg/hour. Following adjustments to the fuel flow rate, the burner temperature is then gradually raised. The burner temperature might be initially set to 800 degrees Celsius, then increased to 900 degrees Celsius, and finally to 1000 degrees Celsius. Each step in the sequence of modifications is carefully timed and monitored to ensure that the cement kiln 102 responds positively, and any adverse effects are mitigated.

The automation module 112 is configured to cause the processor 202 to determine an effectiveness parameter of each control procedure of the plurality of control procedures based on the identified one or more interrelationships. The effectiveness parameter of a specific control procedure is indicative of the time taken by the control procedure to achieve kiln stability.

Examples of data dimensions of the effectiveness parameter include various metrics such as the duration required to reach a stable operating state, the consistency and quality of clinker produced by the cement kiln 102, and the overall energy efficiency of the cement kiln 102. In other words, the effectiveness parameter of each control procedure is a composite metric that quantifies the performance of the control procedure.

In one example, the effectiveness parameter is generated by analyzing the historical data to identify a plurality of relationships between specific changes in input parameters and the impact of the specific changes on a plurality of process parameters.

For example, the processor 202 analyzes how incremental adjustments to the fuel flow rate and burner temperature influence internal temperature and clinker quality of the cement kiln 102 over time. The kiln stability refers to a condition where the cement kiln 102 operates within a desired range of parameters, ensuring consistent clinker quality and efficient energy use. The kiln stability is measured by monitoring the plurality of process parameters such as temperature, pressure, and fuel consumption.

In one example, the plurality of process parameters are represented through time-series data and statistical metrics that indicate whether the cement kiln 102 is operating within acceptable limits.

In one example, the effectiveness parameter of each control procedure is generated from the one or more interrelationships by evaluating how quickly and efficiently the cement kiln 102 reaches stability following a series of modifications of the control procedure. For instance, if the historical data shows that increasing the fuel flow rate by 50 kg/hour and adjusting the burner temperature by 10 degrees Celsius results in the kiln reaching stability within two hours, the one or more interrelationships contribute to a high effectiveness parameter. Conversely, if similar modifications take longer to stabilize the kiln or result in inconsistent clinker quality, the effectiveness parameter would be lower. In other words, the effectiveness parameter is a composite metric that quantifies the performance of the control procedure based on a plurality of factors associated with the cement kiln 102. The plurality of factors includes the time required to reach a stable operating state, the consistency and quality of the clinker produced, overall energy consumption, and the reduction of emissions.

For example, the time required to reach stability is a critical factor because shorter stabilization times lead to higher productivity and reduced downtime. The consistency and quality of the clinker are essential for meeting production standards and minimizing waste. Overall energy consumption is a significant factor as it directly affects the operational costs and environmental footprint of the cement plant. Reduction of emissions is increasingly important for regulatory compliance and environmental sustainability.

In one example, the effectiveness parameter of the specific control procedure is derived from the plurality of factors by using a weighted scoring system, where each factor is assigned a weightage based on the impact of the specific procedure on the overall performance of the kiln. For instance, the time required to reach stability might be weighted more heavily than the reduction of emissions if the primary goal is to maximize production efficiency.

The automation module 112 is configured to cause the processor 202 to select a control procedure from the plurality of control procedures based on the effectiveness parameter of the control procedure. The selection is carried out by the processor 202, which employs a machine learning model designed to evaluate the historical data, real-time sensor feedback, and the effectiveness parameter of each control procedure to select the control procedure. An input variable for the machine learning model is the effectiveness parameter. An output variable of the machine learning model is the selection of the control procedure from the plurality of control procedures. The selected control procedure is identified based on the effectiveness parameter of the control procedure. Examples of the machine learning models include decision trees, random forests, support vector machines (SVM), and neural networks. For instance, a random forest model can be used to analyze the effectiveness parameter in light of the one or more input parameters and real-time process conditions of the cement kiln 102. Similarly, a neural network model can be trained to predict the most effective control procedure based on the effectiveness parameter. The training of the machine learning model involves several steps. Initially, the processor 202 collects a training dataset comprising the effectiveness parameter and historical data on various input parameters such as fuel feed rate, air flow, kiln speed, raw material composition, and firing temperature. The training dataset also includes corresponding process parameters such as temperature, pressure, and gas composition within the kiln, as well as the effectiveness parameters of past control procedures. During the training phase, the machine learning model, for example, a random forest algorithm, is exposed to the training data. The machine learning model learns to map the input variables, which are the effectiveness parameters, to the output variables, which are the selected control procedure. The machine learning model adjusts internal parameters to minimize prediction error, which is the difference between a predicted control procedure and an actual control procedure that led to optimal kiln stability, according to the historical data.

For example, suppose the historical data reveals that a first control procedure achieved kiln stability in two hours, maintained high clinker quality, and optimized energy usage. A second procedure may have taken three hours to achieve stability and resulted in lower clinker quality with higher energy consumption. The processor 202 assigns a higher effectiveness parameter to the first control procedure due to its superior performance. The machine learning model then uses the effectiveness parameter to select the most appropriate control procedure for current process conditions. For instance, if the current kiln operation faces similar disturbances as those recorded in the historical data, the processor 202 will select the first control procedure with a higher effectiveness parameter. By doing so, the processor 202 selects the control procedure which is likely to achieve kiln stability in the shortest time, maintain clinker quality, and optimize energy usage.

The automation module 112 is configured to cause the processor 202 to generate a control parameter sequence based on the effectiveness parameter of the selected control procedure. The control parameter sequence refers to a specific set of modifications made to the one or more input parameters in a defined order during the control procedure. The control parameter sequence is selected based on the effectiveness parameter of the control procedure, which is indicative of the time taken by the control procedure to achieve kiln stability, ensuring that the most efficient sequence is utilized. To generate the control parameter sequence, the processor 202 examines the control procedure to identify successful sequences of input parameter adjustments that led to stable kiln operation.

For example, in a cement kiln 102 operation, the historical data might reveal that increasing the fuel feed rate by 30 kg/hour and simultaneously adjusting the burner temperature by 5 degrees Celsius resulted in the kiln reaching stability within three hours. The processor 202 would record these specific modifications as part of the control parameter sequence. The generation of the control parameter sequence is done using a machine learning algorithm, such as a neural network or a decision tree. The machine learning algorithm analyzes the historical data to identify patterns and correlations between the input parameter modifications and resulting process stability. The control parameter sequence is then dynamically adjusted based on real-time feedback from the one or more sensors 104 installed in the cement kiln 102. The one or more sensors 104 provide continuous data on various dimensions of operating conditions of the cement kiln 102, such as temperature, pressure, fuel feed rate, and airflow rate. The processor 202 uses real-time feedback to compare the current state of the cement kiln 102 with the desired state as predicted by the machine learning algorithm. If discrepancies are detected, the processor 202 adjusts the control parameter sequence accordingly, ensuring that the cement kiln 102 remains stable and operates efficiently. The control parameter sequence is intrinsically linked to the control procedure, as the control procedure dictates the exact steps and order in which the one or more input parameters are adjusted. The importance of the defined order lies in the one or more interrelationships between different parameters; for instance, adjusting the fuel feed rate before setting the airflow might yield different results than doing the reverse. The defined order is typically determined by analyzing historical data and expert knowledge, ensuring that the sequence follows a proven path to stability.

The automation module 112 is configured to cause the processor 202 to execute the generated control parameter sequence. Execution refers to the implementation of modifications to the input parameters as outlined in the control parameter sequence. In the context of a cement kiln 102 operation, execution involves the real-time adjustment of various technical components to achieve optimal process conditions. One or more technical parts of a cement plant used for the execution include a fuel feed system, air supply system, temperature control units, and a monitoring sensor. For instance, the fuel feed system may include variable speed drives and feeders that regulate the amount of fuel being fed into the kiln. The air supply system may consist of fans and dampers that control the airflow into the combustion chamber. Temperature control units may involve burners and thermocouples that ensure the kiln maintains the desired temperature profile. During execution, the processor 202 sends commands to the one or more technical parts to adjust settings according to the control parameter sequence.

For example, the processor 202 may increase the fuel feed rate by adjusting the speed of the fuel feed drive, or it may modify the airflow by changing the position of dampers in the air supply system. The effect of execution is the stabilization of the kiln operation, leading to consistent clinker quality and optimized energy consumption. The input variables used by the processor 202 to execute the control parameter sequence include current values of fuel feed rate, airflow, and kiln temperature, which are continuously monitored by sensors. A set of input variables provides real-time data to the processor 202, allowing for dynamic adjustments. A set of output variables of execution are modified settings of technical components, such as the new fuel feed rate, adjusted airflow, and stabilized kiln temperature. The output variables result in the desired process conditions being achieved, ensuring efficient and stable kiln operation.

The automation module 112 is configured to cause the processor 202 to display a complete startup procedure curve to an operator prior to initiating a kiln startup. The complete startup procedure is generated from the control parameter sequence by the processor 202 through a series of steps. Initially, the processor 202 analyzes the historical data to identify successful sequences of input parameter adjustments that led to stable kiln operation. The processor 202 then organizes these sequences into a coherent startup procedure, detailing each step required to achieve optimal kiln performance. In the context of a cement kiln 102 operation, the complete startup procedure may include specific instructions for adjusting the fuel feed rate, airflow rate, burner temperature, and kiln rotation speed. For instance, the procedure might start by setting the fuel feed rate to an initial value of 100 kg/hour, followed by gradually increasing the burner temperature by 5 degrees Celsius every 30 minutes. The processor 202 ensures that each step in the sequence is logically ordered and timed to achieve the desired stability efficiently. The importance of generating the complete startup procedure lies in its ability to standardize the kiln startup process, reducing variability and dependence on individual operator experience. By providing a detailed and proven sequence of adjustments, the startup procedure minimizes the risk of errors and ensures that the kiln reaches a stable operating state in the shortest possible time. The complete startup procedure is useful for the operator as it serves as a clear and actionable roadmap, guiding them through each step of the process. The advantages for the operator are manifold. Firstly, the startup procedure reduces the cognitive load on the operator by providing precise instructions, eliminating guesswork and reducing the likelihood of mistakes. Secondly, the standardized procedure ensures consistent clinker quality and optimal energy consumption, enhancing overall operational efficiency. Thirdly, the startup procedure allows less experienced operators to achieve results comparable to those of seasoned experts, leveling the playing field and improving workforce flexibility. Finally, the detailed procedure enables operators to monitor progress and make informed adjustments in real-time, fostering a proactive approach to kiln management.

The automation module 112 is configured to cause the processor 202 to generate, based on the control procedure, a set of guidelines that is applicable to future startup procedures. The processor 202 analyzes the historical data and the selected control procedure to develop comprehensive guidelines. These guidelines contain detailed instructions on the sequence of modifications to the input parameters, such as fuel feed rate, air flow, kiln speed, and raw material composition. The guidelines also specify the expected variations in process parameters, including temperature, pressure, and gas composition within the kiln. In addition to the step-by-step modifications, the guidelines provide thresholds and limits for each input parameter to ensure safe and efficient operation.

For example, the guidelines may indicate that the fuel feed rate should be increased incrementally by a specific amount every ten minutes until a target temperature is reached. The air flow might need to be adjusted in tandem to maintain optimal combustion conditions. The kiln speed could be regulated to control the residence time of the material, ensuring thorough heating and consistent clinker quality. The guidelines also include contingency plans for handling unexpected disturbances. If real-time sensor feedback indicates a deviation from the expected process parameters, the guidelines offer corrective actions to bring the system back to stability. For instance, if the temperature inside the kiln drops below the desired range, the guidelines might recommend increasing the fuel feed rate or adjusting the air flow to restore the temperature. An example of how the guidelines work in a cement kiln 102 operation involves the processor 202 collecting historical data on various input parameters and analyzing the effectiveness of past control procedures. Suppose the historical data shows that a particular control procedure achieved kiln stability in two hours, maintained high clinker quality, and optimized energy usage. The processor 202 uses this information to generate guidelines for future startup procedures. For instance, the guidelines might specify that during startup, the fuel feed rate should initially be set to 500 kg per hour and gradually increased by 50 kg every ten minutes. The air flow should be adjusted to maintain an oxygen level of 5% in the kiln exhaust gases. The kiln speed should be set to 3 RPM initially and increased to 4 RPM once the temperature reaches 800 degrees Celsius. The guidelines also include instructions for monitoring real-time sensor data and making adjustments if the process parameters deviate from the expected values. If the temperature inside the kiln drops below 750 degrees Celsius, the guidelines recommend increasing the fuel feed rate by an additional 25 kg per hour until the temperature stabilizes.

The automation module 112 is configured to cause the processor 202 to automate operating strategies specifically tailored for disturbed process conditions in a cement kiln 102, where disturbed process conditions refer to any deviations from normal operating parameters that can affect kiln performance and stability. The disturbed conditions include fluctuations in fuel quality, variations in raw material composition, and unexpected changes in temperature or pressure within the kiln. By receiving real-time process conditions through a network of sensors, including temperature sensors, pressure sensors, flow meters, and gas analyzers, the processor 202 can monitor the kiln's operational state continuously. The real-time data collected from these sensors provide immediate feedback on the kiln's performance, allowing the processor 202 to make precise and timely modifications to input parameters. These modifications, such as adjusting the fuel flow rate or burner temperature, result in measurable effects on kiln operation, demonstrating a clear cause-and-effect relationship.

For example, increasing the fuel flow rate can lead to a rise in burner temperature, which subsequently impacts the internal temperature profile and clinker quality. By leveraging real-time sensor data, the system ensures that the kiln operates within optimal parameters, maintaining stability and efficiency even under disturbed conditions. The processor 202 is further configured to automate the event-reaction-result phenomenon to handle disturbances more effectively. By leveraging a digitized database of historical operator actions, the processor 202 is enabled to automatically respond to disturbances based on proven strategies that have led to successful outcomes in the past. Thus, the cement kiln 102 is stabilized faster, minimizing downtime and maintaining consistent production quality. The processor 202 is further configured to use a self-learning mechanism that continuously refines and optimizes control strategies. The processor 202 utilizes new data and operator actions to improve recommendations over time. By analyzing the effectiveness of past adjustments and incorporating successful strategies into the database, the processor 202 evolves to handle disturbances more efficiently. Thus, a self-learning capability ensures that the processor 202 adapts to changing conditions and continuously improves performance, leading to enhanced kiln stability and productivity. Additionally, the processor 202 provides a cloud of recommended options derived from historical data. The cloud comprises multiple potential solutions for any given disturbance, allowing the processor 202 to select the most effective match based on current process conditions. By comparing the present situation with similar past occurrences, the processor 202 is configured to select the control procedure to implement, thereby providing a possible outcome for maintaining kiln stability and clinker quality.

In one example, the processor 202 is configured to employ predefined physical parameter limits integrated into interlocking functions. The physical parameter limits act as safety thresholds, preventing the processor 202 from making adjustments that could harm equipment or disrupt the process. The processor 202 is further configured to support the dynamic adoption of operator changes. When operators make adjustments that lead to better performance, the processor 202 dynamically incorporates these changes into the database, thereby enhancing the self-learning mechanism, allowing the processor 202 to adapt to new strategies and continuously improve recommendations. By valuing operator expertise and incorporating it into the processor 202's decision-making process, the processor ensures that human insights contribute to the overall optimization of the cement kiln 102 operation.

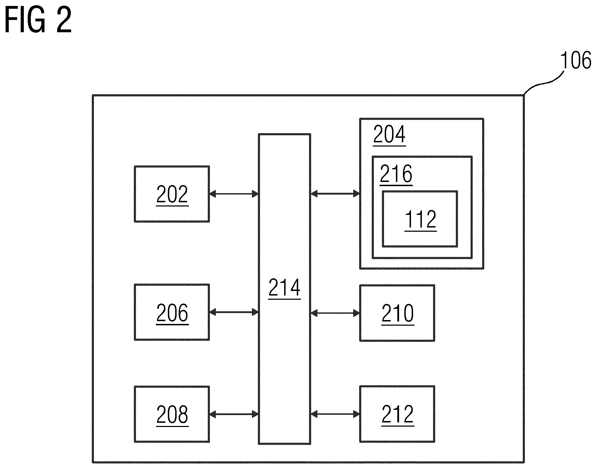

FIG. 2 is a block diagram of a control system 106, in which an embodiment of the present invention can be implemented. In FIG 2, the control system 106 includes a processor(s) 202, an accessible memory 204, a storage unit 206, a communication interface 208, an input-output unit 210, a network interface 212 and a bus 214.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like.

The memory 204 may be non-transitory volatile memory and non-volatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes an automation module 112 stored in the form of machine-readable instructions on any of the above-mentioned storage media and may be in communication with and executed by the processor(s) 202.

The storage unit 206 may be a non-transitory storage medium configured for storing a database which comprises server version of the plurality of programming blocks associated with the set of industrial domains.

The communication interface 208 is configured for establishing communication sessions between the cement kiln 102 and the control system 106. The communication interface 208 allows one or more control applications running on the HMI 108 to import/export project files into the control system 106. In an embodiment, the communication interface 208 interacts with the interface at the HMI 108 for allowing one or more plant operators to control the cement manufacturing kiln 102.

The input-output unit 210 may include input devices a keypad, touch-sensitive display, camera (such as a camera receiving gesture-based inputs), etc. capable of receiving one or more input signals, such as user commands to control the plurality of operational parameters. Also, the input-output unit 210 may be a display unit for displaying a graphical user interface which visualizes the plurality of operational parameters. The bus 214 acts as interconnect between the processor 202, the memory 204, and the input-output unit 210.

The network interface 212 may be configured to handle network connectivity, bandwidth and network traffic between the control system 106, the HMI 108, the one or more sensors 104 and the cement kiln 102.

Those of ordinary skilled in the art will appreciate that the hardware depicted in FIG 2 may vary for particular implementations.

For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of the control system 106 as is unique to the present disclosure or necessary for an understanding of the present disclosure is depicted and described. The remainder of the construction and operation of the control system 106 may conform to any of the various current implementation and practices known in the art.

Those of ordinary skilled in the art will appreciate that the hardware depicted in FIG 2 may vary for particular implementations.

For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of the control system 106 as is unique to the present disclosure or necessary for an understanding of the present disclosure is depicted and described.

The remainder of the construction and operation of the control system 106 may conform to any of the various current implementation and practices known in the art.

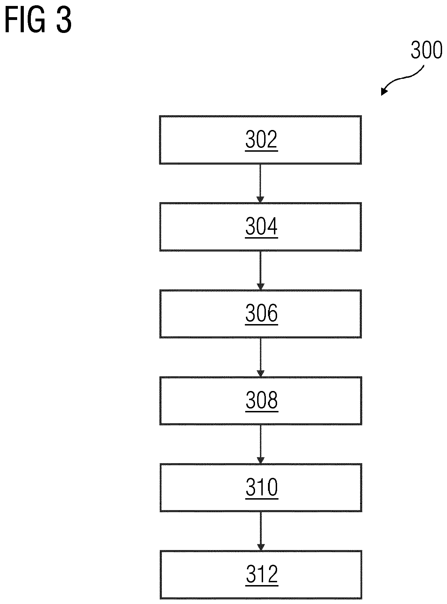

FIG. 3 is a process flowchart illustrating a method of automating control procedures in a cement kiln, in which an embodiment of the present invention can be implemented. FIG. 3 is explained in conjunction with FIG. 1 and FIG. 2.

At step 302, historical data collected over a specific period of operation of the cement kiln 102 is received by processor 202.

At step 304, the historical data is analyzed by processor 202 to identify one or more interrelationships between one or more modifications of one or more input parameters and one or more variations in a plurality of process parameters. The one or more modifications are identified as specific changes in the one or more input parameters. The one or more variations on the plurality of process parameters are identified as measurable effects on a kiln operation due to the one or more modifications. The control procedure is identified as comprising a sequence of modifications of the one or more input parameters. An effectiveness parameter of each control procedure of a plurality of control procedures is determined by processor 202 based on the identified one or more interrelationships. The effectiveness parameter is indicative of the time taken by the control procedure to achieve kiln stability.

At step 306, a control procedure is selected by processor 202 from the plurality of control procedures based on the effectiveness parameter of the control procedure.

At step 308, a control parameter sequence is generated by processor 202 based on the effectiveness parameter of the control procedure. The control parameter sequence is a specific set of modifications made to the one or more input parameters in a defined order during the control procedure.

At step 310, the control parameter sequence is dynamically adjusted by processor 202 to adapt to real-time process conditions of the cement kiln 102.

At step 312, the generated control parameter sequence associated with the control procedure is executed by processor 202.

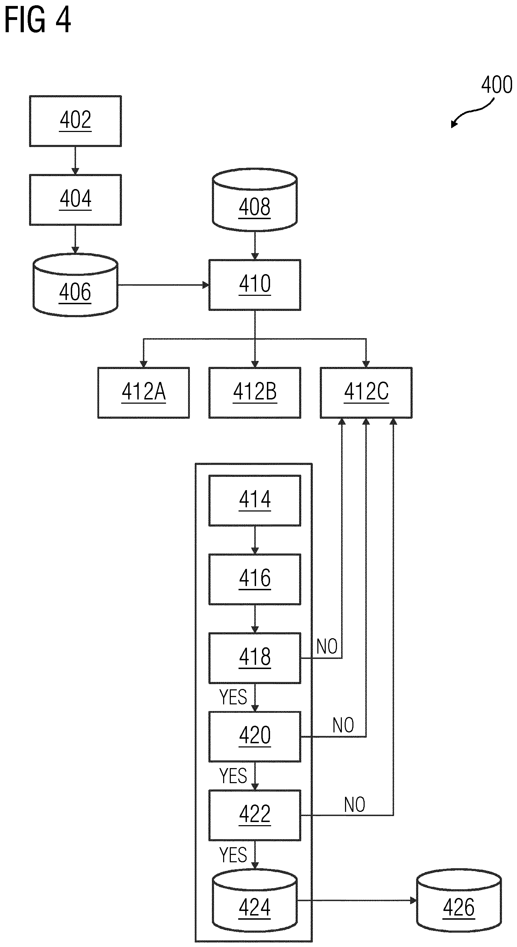

FIG. 4 is a process flowchart illustrating an exemplary use case of automating control procedures in a cement kiln, according to an embodiment of the present invention.

At step 402, a control process starts. The control process is triggered by the control system 106 when a disturbed process condition is detected in the cement kiln 102 or during a scheduled startup procedure.

At step 404, a current value and a current situation of the cement kiln 102 are input into the processor 202. The current value comprises real-time data collected by the one or more sensors 104, which capture a plurality of operational parameters such as temperature, pressure, fuel flow rates, and gas composition.

At step 406, the current value and current situation are stored in a memory (Current Value) + Current Situation database.

At step 408, a digitized database of historical data is accessed by the processor 202. The historical data comprises recorded information about the cement kiln 102's operational parameters, performance metrics, and outcomes over a defined period. Examples of the historical data include fuel consumption rates, temperature profiles, feed rates of raw materials, and clinker quality metrics.

At step 410, the processor 202 is configured to check for similar situations in the historical database. The processor 202, through the automation module 112, analyzes the historical data to find past occurrences with similar operational parameters and conditions as the current situation.

At step 412A-C, the processor 202 identifies and isolates similar situations (Situation 1, Situation 2, ..., Situation n) from the historical data. Thus, the processor 202 is configured to identify events that closely match the current kiln conditions, enabling the processor 202 to draw parallels and derive actionable insights. For each similar situation identified, steps from 414 to 424 are carried out:

At step 414, the processor 202 is configured to determine step-by-step changes in the control parameters. Thus, the processor is configured to determine historical control procedures that were implemented in each similar situation, identifying specific modifications made to input parameters such as fuel flow rate, burner temperature, and raw material feed rate.

At step 416, the processor 202 is configured to determine an impact of the identified specific modifications on one or more process parameters of the cement kiln 102. The processor 202 is configured to determine how each modification has influenced the one or more process parameters of the cement kiln 102, such as internal temperature, pressure, and clinker quality.

At step 418, the processor 202 verifies whether the plurality of process parameters are stable. If the plurality of process parameters, such as temperature and pressure, are not stable, the processor 202 loops back to step 416 to re-evaluate and make necessary adjustments.

At step 420, the processor 202 is configured to determine whether sufficient heat is maintained. Thus, the processor 202 ensures that a combustion process within the cement kiln 102 is optimal for clinker formation. If sufficient heat is not maintained, the processor 202 loops back to step 418.

At step 422, the processor 202 verifies whether clinker quality is maintained within a good range. Clinker quality is critical for the final strength and quality of the cement produced. If clinker quality is not within the desired range, the processor 202 loops back to step 420.

At step 424, the processor 202 identifies the best situations (S1, S2, ..., Sn) based on the shortest time to achieve kiln stability. The processor 202, using the effectiveness parameter of each control procedure, selects a control procedure that resulted in the quickest stabilization of the cement kiln while maintaining optimal clinker quality and energy efficiency.

At step 426, the processor 202 selects the control procedure based on the identified best situations and displays the control procedure to the operator. The human machine interface (HMI) 108 enables operators to view the recommended control procedure, providing them with a clear and actionable roadmap for optimizing the kiln operation.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference list

**1. System for automating control procedures in a cement kiln**
   ∘ 100: System
   ∘ 102: Cement kiln
   ∘ 104: One or more sensors
   ∘ 106: Control system
   ∘ 108: Human machine interface (HMI)
   ∘ 110: Carbon Monoxide (CO) probe
   ∘ 112: Automation module
**2. Control system components**
   ∘ 202: Processor(s) (e.g., Programmable Logic Controller (PLC))
   ∘ 204: Memory
   ∘ 206: Storage unit
   ∘ 208: Communication interface
   ∘ 210: Input-output unit
   ∘ 212: Network interface
   ∘ 214: Bus
   ∘ 216: Integrated Development Environment (IDE)
**3. Method steps**
   ∘ 302: Receiving historical data
   ∘ 304: Analyzing historical data to identify interrelationships
   ∘ 306: Selecting a control procedure
   ∘ 308: Generating a control parameter sequence
   ∘ 310: Dynamically adjusting the control parameter sequence
   ∘ 312: Executing the generated control parameter sequence
**4. Process flowchart steps**
   ∘ 402: Control process starts
   ∘ 404: Input current value and situation
   ∘ 406: Store current value and situation in memory
   ∘ 408: Access digitized database of historical data
   ∘ 410: Check for similar situations in historical database
   ∘ 412A-C: Identify and isolate similar situations
   ∘ 414: Determine step-by-step changes in control parameters
   ∘ 416: Determine impact on process parameters
   ∘ 418: Verify if process parameters are stable
   ∘ 420: Determine if sufficient heat is maintained
   ∘ 422: Verify clinker quality
   ∘ 424: Identify best situations based on time to stability
   ∘ 426: Select and display control procedure to the operator

## Claims

1. A method for automating control procedures in a cement kiln, comprising:
receiving, by a processor (202), historical data collected over a specific period of operation of the cement kiln (102);
analyzing, by the processor (202), the historical data to identify one or more interrelationships between:
one or more modifications of one or more input parameters, and
one or more variations in a plurality of process parameters, wherein:
the one or more modifications are specific changes in the one or more input parameters,
the one or more variations on the plurality of process parameters is a measurable effect on a kiln operation due to the one or more modifications, and
the control procedure comprises a sequence of modifications of the one or more input parameters;
determining, by the processor (202), an effectiveness parameter of each control procedure of a plurality of control procedures based on the identified one or more interrelationships, wherein the effectiveness parameter is indicative of a time taken by the control procedure to achieve kiln stability;
selecting, by the processor (202), a control procedure from the plurality of control procedures based on the effectiveness parameter of the control procedure;
generating, by the processor (202), a control parameter sequence based on the effectiveness parameter of the control procedure, wherein the control parameter sequence is a specific set of modifications made to the one or more input parameters in a defined order during the control procedure, and
the control parameter sequence is dynamically adjusted to adapt to real-time process conditions of the cement kiln (102); and
executing, by the processor (202), the generated control parameter sequence associated with the control procedure.

2. The method of claim 1, wherein the one or more input parameters comprises one or more kiln input parameters having an impact on a stability of the cement kiln (102).

3. The method of claim 1, wherein the effectiveness parameter is a composite metric that quantifies a performance of the control procedure based on a plurality of factors associated with the cement kiln (102).

4. The method of claim 1, wherein the control parameter sequence is generated by the processor (202) using a machine learning algorithm configured to analyze the historical data and is dynamically adjusted based on real-time feedback from one or more sensors (104).

5. The method of claim 4, wherein the real-time process conditions are conditions monitored using the one or more sensors (104).

6. The method of claim 1, wherein the one or more interrelationships between the one or more input parameters comprises a plurality of relationships between specific changes in the one or more input parameters and the one or more variations of the plurality of process parameters.

7. The method of claim 1, further comprising:
displaying, by the processor (202), a complete startup procedure curve to an operator prior to initiating a kiln startup, wherein the startup procedure curve comprises information about the one or more modifications to the one or more input parameters and the plurality of process parameters.

8. The method of claim 1, further comprising:
determining the control procedure from a plurality of control procedures based on the effectiveness parameter of the control procedure; and
generating, based on the control procedure, a set of guidelines that is applicable to future startup procedures.

9. A system for automating control procedures in a cement kiln, comprising:
a memory (204) configured to store historical data collected over a predefined period of operation from the cement kiln (102);
a processor (202) configured to:
receive the historical data stored in the memory (204);
analyze the received historical data to prioritize one or more parameters for the cement kiln (102), wherein the one or more parameters are prioritized by evaluating an influence of the one or more parameters on kiln stability;
analyze the historical data to identify one or more interrelationships between:
one or more modifications in the one or more parameters, and
one or more variations in a plurality of process parameters, wherein
the one or more modifications are specific changes in the one or more parameters,
the one or more variations on the plurality of process parameters is a measurable effect on a kiln operation due to the one or more modifications, and
the control parameter sequence comprises a sequence of modifications of the one or more parameters;
determine an effectiveness parameter of each control procedure of a plurality of control procedures based on the identified one or more interrelationships,
wherein the effectiveness parameter is indicative of a time taken by the control procedure to achieve kiln stability;
selecting, by the processor (202), a control procedure from the plurality of control procedures based on the effectiveness parameter of the control procedure; and
execute a control parameter sequence based on the effectiveness parameter of the control procedure, wherein the control parameter sequence is dynamically adjusted to adapt to real-time process conditions.

10. The system of claim 9, wherein the one or more parameters are kiln input parameters that have an impact on the stability of the cement kiln (102) during startup procedures.

11. The system of claim 9, wherein the effectiveness parameter is a composite metric that quantifies the performance of the control procedure based on a plurality of factors associated with the cement kiln (102), including the duration required to reach a stable operating state, the consistency and quality of the end product, and the overall energy usage, with each factor weighted based on its relative significance to operational efficiency.

12. The system of claim 9, wherein the control parameter sequence is created by the processor (202) using a machine learning algorithm configured to analyze historical data to identify the one or more modifications of the one or more parameters, and is dynamically adjusted based on real-time feedback from one or more process sensors (104).

13. The system of claim 9, wherein the real-time process conditions are conditions monitored using one or more sensors (104) configured to measure the one or more parameters of the cement kiln (102).

14. A computer-program product, having machine-readable instructions stored therein, that when executed by a processor (202), cause the processors to perform a method according to any of the claims 1-8.
